# EUROPÄISCHE PATENTSCHRIFT

(11) **EP 1 545 743 B1**
(45) Veröffentlichungstag und Bekanntmachung des Hinweises auf die Patenterteilung: **06.08.2008**
(21) Anmeldenummer: 02782701.3
(22) Anmeldetag: 05.10.2002
(51) Int. Cl.: B01D 45/08, B01D 45/10, B01D 53/18, B01D 53/50

(54) **RAUCHGASWÄSCHER MIT EINER STÜTZKONSTRUKTION FÜR BEDÜSUNGSROHRE**
FLUE GAS WASHER WITH A SUPPORTING CONSTRUCTION FOR SPRAY PIPES
EPURATEUR DES GAZ DE FUMEES COMPORTANT UNE CONSTRUCTION SUPPORT DESTINEE A DES TUBES DE PULVERISATION

(43) Veröffentlichungstag der Anmeldung: 29.06.2005
(73) Patentinhaber: Munters Euroform GmbH, 52072 Aachen (DE)
(72) Erfinder: WOLF, Hubert, 40668 Meerbusch (DE); KANKA, Helmut, 47178 Duisburg (DE)
(74) Vertreter: Hauck Patent- und Rechtsanwälte
(86) Internationale Anmeldenummer: PCT/DE2002/003776
(87) Internationale Veröffentlichungsnummer: WO 2004/033071

(56) Entgegenhaltungen:
- CH-A- 662 932
- DE-C- 3 434 133
- US-A- 2 077 996
- US-A- 5 389 127
- US-A- 5 749 930

## Beschreibung

Die vorliegende Erfindung betrifft einen Rauchgaswäscher mit einer Stützkonstruktion für Bedüsungsrohre zum Reinigen von mindestens einer horizontal angeordneten Tropfenabscheiderlage, die aus Tropfenabscheiderpaketen gebildet ist, welche auf Trägern gelagert sind.

Rauchgaswäscher besitzen in der Regel mindestens eine Grobabscheiderstufe und eine Feinabscheiderstufe, die übereinander auf je einer Trägerlage angeordnet sind, und zwar in einem Höhenabstand voneinander, der eine manuelle Inspektion zwischen beiden Abscheiderstufen zuläßt. Jede Abscheiderstufe besteht aus einer Vielzahl gleicher Abscheiderelemente, bei denen es sich um Tropfenabscheiderpakete handelt, die jeweils aus einzelnen Tropfenabscheiderlamellen zusammengesetzt sind.

Derartige Tropfenabscheiderlagen müssen periodisch gereinigt werden, da sie mit zunehmendem Einsatz verschmutzen.

Hierzu hat man in die Rauchgaswäscher Bedüsungsrohre eingebaut, und zwar in der Regel oberhalb, unterhalb und zwischen den einzelnen Tropfenabscheiderlagen, so daß diese zu Reinigungszwecken beidseitig mit einem geeigneten Reinigungsmedium (Wasser) bedüst werden können. Die Bedüsungsrohre werden dabei von Stützkonstruktionen getragen, die eine gleichmäßige Verteilung der Bedüsungsrohre über den Querschnitt des Rauchgaswäschers sicherstellen.

Es ist dabei bekannt, die Stützkonstruktionen für die Bedüsungsrohre an den Trägern anzuordnen, auf denen die Tropfenabscheiderpakete gelagert sind. Diese Stützkonstruktionen werden beispielsweise von Stützelementen gebildet, die sich von den Trägern nach oben und unten erstrecken und entsprechende Tragrahmen lagern, auf denen die Bedüsungsrohre angeordnet sind.

Derartige Anlagen müssen periodisch inspiziert und gereinigt werden, um die Betriebsbereitschaft der Bedüsungsrohre aufrechtzuerhalten. Inspektionen sind jedoch bei solchen Anlagen nur schwierig durchzuführen, weil die Bedüsungsrohrtragkonstruktion bestehend aus den an den Trägern angeordneten Stützelementen und dem Tragrahmen für die Bedüsungsrohre eine Begehung, die im Bereich der Träger durchgeführt werden muß, behindert. Inspektionen, insbesondere Reinigungen, die irgendwann zwingend erforderlich sind, sind daher bei diesen Anlagen nur unter erschwerten Umständen durchführbar.

Die vorstehend geschilderten Erschwernisse existieren immer dann, wenn die Stützkonstruktion für die Bedüsungsrohre an den Trägern für die Tropfenabscheiderlagen angeordnet ist, da auf diese Weise der Raum oberhalb und unterhalb der Träger von den Stützelementen und den die Träger kreuzenden Tragrahmen besetzt ist. Diese Tragrahmen sind in vielen Fällen auch mit der Wäscherwand selbst verbunden, so daß auch in diesem Bereich die Begehungen erschwert werden.

Um die Bedüsungsrohre in Rauchgaswäschern anzuordnen, müssen daher deren Stützkonstruktionen an den Trägern für die Tropfenabscheiderlagen und damit am Wäscher selbst angebracht werden. Dies bedeutet für den Wäscherhersteller einen zusätzlichen Aufwand, da dieser eine sorgfältig abgestimmte, maßhaltige Ausführung liefern muß, die besonders dann, wenn die Trägerlagen einen Korrosionschutzüberzug, beispielsweise eine Gummierung, erhalten, kritisch zu betrachten ist.

Aus der DE-C-3434133 ist ein Rauchgaswäscher mit einer Stützkonstruktion für Bedüsungsrohre zum Reinigen von mindestens einer Tropfenabscheiderlage, die aus Tropfenabscheiderpaketen gebildet ist, welche auf Trägern gelagert sind, bekannt. Bei diesem Rauchgaswäscher sind die Tropfenabscheiderpakete geneigt angeordnet. Auch hierbei ist die Stützkonstruktion für die Bedüsungsrohre auf den vorgesehenen Trägern gelagert, so dass auf diese Weise der Raum oberhalb der Träger von der Stützkonstruktion besetzt ist.

Auch die US-A-5749930 beschreibt einen Rauchgaswäscher mit einer Stützkonstruktion für Bedüsungsrohre zum Reinigen von mindestens einer Tropfenabscheiderlage, die aus Tropfenabscheiderpaketen gebildet ist, welche auf Trägern gelagert sind. Bei dieser Ausführungsform ist die Stützkonstruktion an Seitenplatten bzw. Trägerplatten von dachförmig geneigt ausgebildeten Tropfenabscheiderpaketen angeordnet, wobei die Tropfenabscheiderpakete mit Hilfe dieser Trägerplatten auf Trägern gelagert sind. Zur Lagerung der Stützkonstruktion müssen daher bei dieser Ausführungsform gesonderte Trägerplatten an den Tropfenabscheiderpaketen vorgesehen sein.

Der vorliegenden Erfindung liegt die Aufgabe zugrunde, einen Rauchgaswäscher der angegebenen Art zu schaffen, der sich besonders einfach inspizieren lässt.

Diese Aufgabe wird erfindungsgemäß durch einen Rauchgaswäscher mit einer Stützkonstruktion für Bedüsungsrohre zum Reinigen von mindestens einer horizontal angeordneten Tropfenabscheiderlage, die aus Tropfenabscheiderpaketen gebildet ist, welche auf Trägern gelagert sind, gelöst, wobei die Stützkonstruktion so angeordnet ist, dass der Raum oberhalb und unterhalb der Träger freigehalten wird, und wobei die Stützkonstruktion durch direkte Anordnung an oder zwischen den Tropfenabscheiderpaketen von der Tropfenabscheiderpaketlage selbst getragen wird und einen Bestandteil derselben bildet.

Der entscheidende Unterschied der erfindungsgemäßen Lösung gegenüber dem eingangs aufgezeigten Stand der Technik besteht darin, dass die Stützkonstruktion für die Bedüsungsrohre nicht direkt mit der Konstruktion des Rauchgaswäschers, beispielsweise dessen Trägern, verbunden, sondern an oder zwischen den Tropfenabscheiderpaketen angeordnet ist und auch zusammen mit diesen eingebaut wird. Das hat den Vorteil, daß der Hersteller des Rauchgaswäschers keine Rücksicht auf die Anbringung der Stützkonstruktion für die Bedüsungsrohre nehmen muß bzw. sein System nicht bereits mit einer derartigen Stützkonstruktion versehen muß, sondern daß die Stützkonstruktion mit den Bedüsungsrohren beim Einbau der Tropfenabscheiderlage bzw. Tropfenabscheiderlagen vorgesehen werden kann. Die Stützkonstruktion bildet daher letztendlich einen Bestandteil des Abscheidersystems.

Durch die erfindungsgemäß vorgenommene Verlagerung der Stützkonstruktion auf das Abscheidersystem und die Anbringung derselben an oder zwischen den einzelnen Tropfenabscheiderelementen bzw. Tropfenabscheiderpaketen wird der Raum oberhalb und unterhalb der Träger zur Lagerung der Tropfenabscheiderpakete freigehalten. Die Stützkonstruktion wird daher auf den Bereich zwischen den Trägern verlagert, wodurch oberhalb und unterhalb der Träger Begehungswege für Inspektionszwecke geschaffen werden, die nicht durch Stütz-elemente bzw. in Querrichtung verlaufende Tragelemente unterbrochen sind. Die Höhe dieser Begehungswege wird durch den Abstand zwischen den Trägerlagen für die Tropfenabscheiderlagen festgelegt.

Bei den Trägern, auf denen die einzelnen Abscheiderpakete gelagert sind, welche die Abscheiderlagen bilden, handelt es sich normalerweise um Doppel-T-Träger oder Hohlprofile, auf deren oberen Flanschen die einzelnen Abscheiderpakete aufliegen. Beim Stand der Technik wurde der Zwischenraum zwischen benachbarten Abscheiderpaketen zur Anbringung der vertikalen Stützelemente ausgenutzt, so daß der Raum über den Trägern nicht mehr begehbar war. Erfindungsgemäß wird nunmehr die Stützkonstruktion vom Träger weg nach links und rechts soweit verlagert, daß sich im Bereich oberhalb und unterhalb des Trägers ein ausreichend großer freier Raum ergibt, der eine Begehung des Systems zu Inspektionszwekken ermöglicht. Dabei wird die Stützkonstruktion von den Abscheiderpaketen selbst getragen oder ist zwischen diesen angeordnet (wenn zwischen benachbarten Trägern mehrere Abscheiderpakete angeordnet sind), wobei sie im letztgenannten Fall von der aus mehreren Abscheiderpaketen bestehenden Abscheiderlage getragen wird. Es versteht sich, daß die Abscheiderpakete hierbei so ausgebildet bzw. so miteinander verbunden sind, daß sie die Stützkonstruktion tragen können.

Bei derjenigen Ausführungsform, bei der die Stützkonstruktion für die Bedüsungsrohre an den Tropfenabscheiderpaketen angeordnet ist, weisen die Tropfenabscheiderpakete vorzugsweise verstärkte Endabschnitte zur Anordnung der Stützkonstruktion auf. Diese verstärkten Endabschnitte müssen sich nicht über die gesamte Breite der Tropfenabscheiderpakete erstrecken, sondern können nur ein Teil hiervon bilden. Die verstärkten Endabschnitte sind vorzugsweise kastenförmig ausgebildet.

Bei dieser Ausführungsform werden die verstärkten Endabschnitte zweckmäßigerweise von mindestens einem stabförmigen Stützelement durchdrungen, wobei sich das Stützelement, das für die Tragkonstruktion der Bedüsungsrohre vorgesehen ist, einseitig oder beidseitig aus den verstärkten Endabschnitten (kastenförmigen Abschnitten) der Tropfenabscheiderpakete nach oben und/oder unten herauserstrecken kann. Die Tragkonstruktion für die Bedüsungsrohre wird dabei vorzugsweise von einem Bedüsungsrohrtragelement gebildet, über das mehrere, insbesondere zwei, Stützelemente miteinander verbunden sind. So kann beispielsweise zwischen zwei benachbarten Trägern ein Tropfenabscheiderpaket mit verstärkten Endabschnitten vorgesehen sein, wobei beide verstärkte Endabschnitte von je einem Stützelement durchdrungen werden, das sich nach oben und unten erstreckt, und wobei die beiden Stützelemente oben und unten über ein Tragelement verbunden sind, auf dem beispielsweise zwei Bedüsungsrohre angeordnet sind, die sich parallel zu den Trägern erstrekken. Es versteht sich, daß die Stützelemente an den verstärkten Endabschnitten der Tropfenabscheiderpakete fixiert sind, so daß sich insgesamt ein stabiles tragfähiges Gebilde ergibt.

Eine weitere Ausführungsform sieht vor, daß die stabförmigen Stützelemente mehrteilig ausgebildet sind und eine Verbindungsstelle außerhalb des verstärkten Endabschnittes besitzen. Hierbei erstreckt sich beispielsweise ein Stützelement durch den verstärkten (kastenförmigen) Endabschnitt und dient als Halterung für weitere Stützelemente, die sich nach unten und/oder oben erstrecken und die Tragelemente für die Bedüsungsrohre haltern. Die Stützelemente können beispielsweise miteinander verschraubt sein.

Falls möglich, kann auch auf das den verstärkten Endabschnitt durchdringende Stützelement verzichtet werden, so daß die Stützelemente lediglich an der Außenseite der verstärkten (kastenförmigen) Endabschnitte befestigt sind, beispielsweise über dort vorgesehene Flansche.

Bei noch einer anderen Ausführungsform sind die verstärkten Endabschnitte so ausgebildet, daß stabförmige Stützelemente in diese einsetzbar sind. Hierbei weist der verstärkte (kastenförmige) Endabschnitt beispielsweise an der Oberseite einen Schlitz auf, durch den das Stützelement eingesetzt wird. Im Inneren besitzt der Endabschnitt dann eine geeignete Aufnahme für das Stützelement.

Die Stützelemente sind vorzugsweise stabförmig ausgebildet, d.h. besitzen in trägerparalleler Richtung keine große Ausdehnung. Hierfür können geeignete Flachprofile Verwendung finden. Die geringe Ausdehnung in trägerparaller Richtung hat den Vorteil, daß eine Inspektion der Abscheiderpakete von den Begehungswegen oberhalb und unterhalb der Träger möglich ist.

Vorzugsweise werden die Abscheiderpakete vom Hersteller direkt mit den verstärkten Endabschnitten ausgestattet, so daß sich ein einstückiges Gebilde ergibt. Eine Anbringung der verstärkten Endabschnitte an den eigentlichen Abscheiderpaketen mit Hilfe von lösbaren oder unlösbaren Verbindungen wird jedoch nicht ausgeschlossen.

Es versteht sich, daß nicht sämtliche Tropfenabscheiderpakete mit verstärkten Endabschnitten versehen sein müssen. Wenn beispielsweise zwischen benachbarten Trägern drei oder mehr Abscheiderpakete angeordnet sind, können nur die beiden den Trägern benachbarten Pakete an ihren zu den Trägern benachbarten Endabschnitten verstärkt sein, während das mittlere Paket normal ausgebildet ist und auch die mittleren Endabschnitte der beiden äußeren Pakete nicht verstärkt sind. Wesentlich ist, daß nur diejenigen Abscheiderpakete verstärkte Endabschnitte oder nur einen verstärkten Endabschnitt aufweisen, die die Stützkonstruktion für die Bedüsungsrohre tragen.

Es wurde bereits erwähnt, daß sich die verstärkten Endabschnitte vorzugsweise nur über einen Teil der Breite der Abscheiderpakete erstrecken. So sind diese vorzugsweise in bezug auf die Breite der Pakete mittig angeordnet, während zu beiden Seiten des verstärkten (kastenförmigen) Abschnittes normale Lamellen des Abscheiderpaketes angeordnet sind. Die verstärkten Endabschnitte bilden sozusagen einen verstärkten oder versteiften Kern, der zum Tragen der Stützkonstruktion geeignet ist.

Bei einer anderen Ausführungsform der Erfindung wird die Stützkonstruktion von Stützelementen gebildet, die jeweils zwischen benachbarten Tropfenabscheiderpaketen angeordnet sind. Diese Ausführungsform wird dann eingesetzt, wenn zwischen zwei benachbarten Trägern zwei oder mehr Tropfenabscheiderpakete vorgesehen sind, die über geeignete Verbindungsmittel, beispielsweise Flanschverbindungen, miteinander verbunden sind. Erfindungsgemäß wird hierbei das Stützelement an der Verbindungsstelle zwischen zwei Tropfenabscheiderpaketen angeordnet und mit den benachbarten Paketen verbunden, so daß diese gemeinsam das Stützelement tragen. Natürlich ist es erfindungsgemäß auch möglich, anstelle eines langen Tropfenabscheiderpaketes zwei kurze Pakete vorzusehen und an der Verbindungsstelle zwischen beiden ein Stützelement anzubringen.

Die Stützelemente sind vorzugsweise über Flanschverbindungen mit den Abscheiderpaketen verbunden.

Bei dieser Ausführungsform tragen die vertikalen Stützelemente die Bedüsungsrohre vorzugsweise unmittelbar. Dies schließt jedoch nicht aus, daß auch hier zwischen Stützelementen Tragelemente vorgesehen sein können, auf denen die Bedüsungsrohre angeordnet sind.

Die Stützelemente sind auch bei dieser Ausführungsform stabförmig oder in Form einer schmalen Platte ausgebildet. Sie können in dem Bereich zwischen den benachbarten Abscheiderpaketen an die Lamellenform der Pakete angepaßt sein, beispielsweise in diesem Bereich nicht geradlinig ausgebildet sein, sondern an den winkligen oder kurvenartigen Verlauf der Lamellen angepaßt sein.

Bei der zuletzt genannten Ausführungsform ist eine Verstärkung der Endabschnitte der Tropfenabscheiderpakete in der Regel nicht erforderlich. Eine solche Verstärkung an den Endbereichen, zwischen denen ein Stützelement angeordnet ist, wird jedoch nicht ausgeschlossen.

Generell kommen als Materialien für die Stützkonstruktion stabile, flexible Werkstoffe zur Anwendung, beispielsweise Edelstahl, aber auch Kunststoff, wie GfK. Auch die Bedüsungsrohre können hierbei aus GfK bestehen. Hierbei kann mit besonders großen Stützabständen gearbeitet werden, die beispielsweise dreimal größer sind als bei Polypropylen.

Die Erfindung betrifft ferner eine Stützkonstruktion zur Verwendung in einem Rauchgaswäscher nach einem der Patentansprüche 1 - 11 Zur direkten Anordnung an oder zwischen den Tropfenabscheidespaketen einer Tropfenabscheiderlage.

Die Erfindung wird nachfolgend anhand von Ausführungsbeispielen in Verbindung mit der Zeichnung im einzelnen erläutert. Es zeigen:
- Figur 1: eine Seitenansicht eines Teiles eines Rauchgaswäschers;
- Figur 2: eine vergrößerte Ansicht eines Teiles des Rauchgaswäschers der Figur 1;
- Figur 3: eine Draufsicht auf einen Teil des Rauchgaswäschers der Figuren 1 und 2 in verkleinertem Maßstab;
- Figur 4: eine Ansicht eines Teiles des Rauchgaswäschers entlang Linie C-D in Figur 2;
- Figur 5: Details des Rauchgaswäschers der vorhergehenden Figuren mit anderen Ausführungsformen der Stützkonstruktion für die Bedüsungsrohre;
- Figur 6a, b und c: eine Draufsicht, eine Seitenansicht und einen Schnitt entlang Linie A-B in Figur 6a eines Tropfenabscheiderpaketes;
- Figur 7: eine weitere Ausführungsform einer Stützkonstruktion für Bedüsungsrohre eines Rauchgaswäschers in der Seitenansicht; und
- Figur 8: die Ausführungsform der Figur 7 in einer um 90° gedrehten Ansicht.

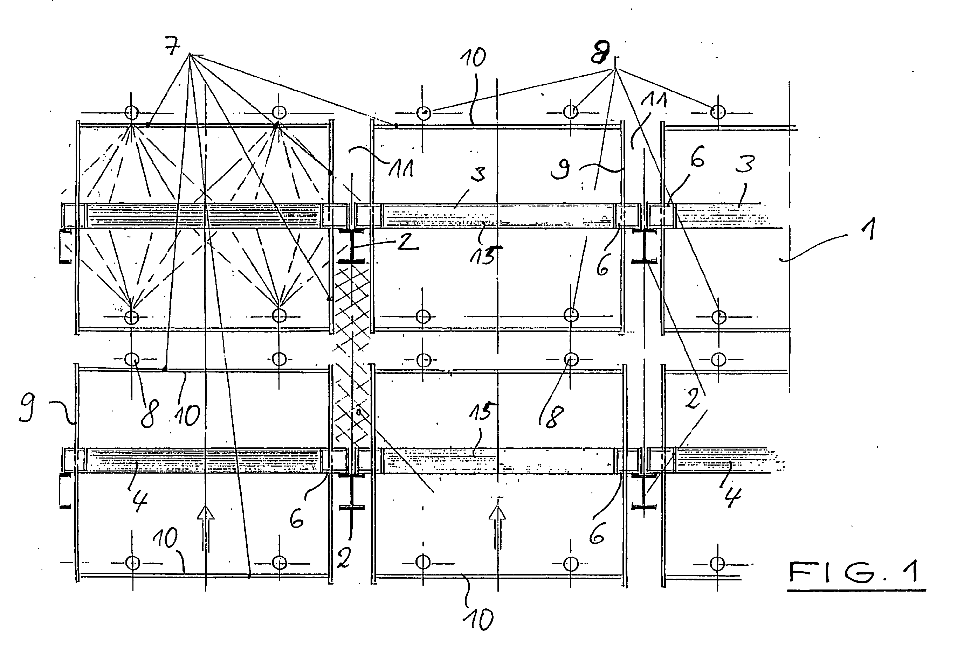

Figur 1 zeigt einen Vertikalschnitt durch einen Teil eines Rauchgaswäschers 1, der als stehender Zylinder ausgebildet ist. Die Strömungsrichtung des Rauchgases ist durch Pfeile angedeutet und verläuft in Figur 1 von unten nach oben. Im Rauchgaswäscher 1 sind eine untere Grobabscheiderlage 4 und eine obere Feinabscheiderlage 3 angeordnet, die sich jeweils aus einzelnen Tropfenabscheiderpaketen zusammensetzen. Dabei ist jedes Tropfenabscheiderpaket mit seinen Enden auf zwei Trägern 2 gelagert, die sich über den Querschnitt des Rauchgaswäschers erstrecken.

Die Tropfenabscheiderpakete bestehen jeweils aus einer Vielzahl von parallel zueinander angeordneten Tropfenabscheiderlamellen, die vom Rauchgasstrom durchströmt werden und dabei die Strömung des Rauchgasstromes umlenken, um auf diese Weise eine Abscheidung der mitgeführten Tropfen zu bewirken. Derartige Tropfenabscheider sind bekannt und bilden keinen Teil der vorliegenden Erfindung.

Jedes Tropfenabscheiderpaket weist an seinen Endbereichen verstärkte kastenförmige Abschnitte 6 auf, mit denen das Paket auf den Trägern 2 aufliegt. Diese verstärkten Endabschnitte 6 tragen eine Stützkonstruktion 7 für Bedüsungsrohre 8, die sich parallel zu den Trägern 2 erstrecken und zum Reinigen der Tropfenabscheiderlagen dienen. Die entsprechenden Bedüsungskegel sind in Figur 1 links oben angedeutet. Die Bedüsungsrohre 8 sind sowohl oberhalb als auch unterhalb der Abscheiderlagen 3 und 4 angeordnet, so daß die Abscheiderpakete von oben und von unten gereinigt werden.

Die Stützkonstruktion 7 besitzt vertikale stabförmige Stütz-elemente 9, die sich durch die kastenförmigen verstärkten Endabschnitte 6 erstrecken und in diesen verankert sind. Diese stabförmigen Stützelemente 9 erstrecken sich somit von den verstärkten Endabschnitten 6 nach oben und unten und tragen an ihren Enden Bedüsungsrohrtragelemente 10, die zwei Stützelemente 9 miteinander verbinden.

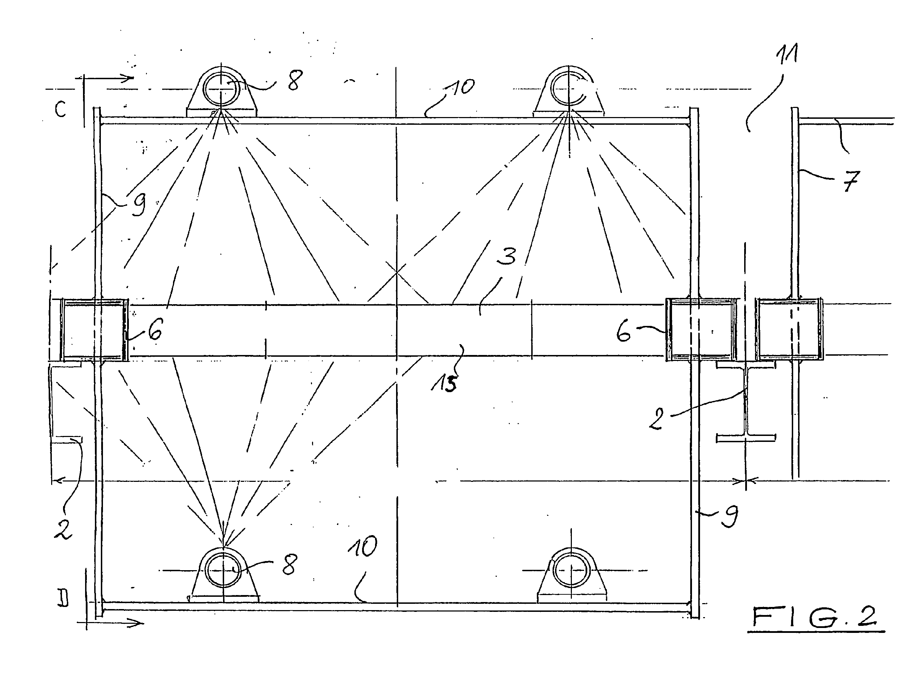

Figur 2 zeigt die genauere Ausbildung der Stützkonstruktion für die Bedüsungsrohre 8. Man erkennt, daß die Feinabscheiderlage 3 aus einem Tropfenabscheiderpaket besteht, das auf den beiden Doppel-T-Trägern 2 aufliegt. Genauer gesagt, das Tropfenabscheiderpaket weist zwei verstärkte kastenförmige Endabschnitte 6 auf, die als Auflager auf den Trägern dienen. Ferner dienen diese verstärkten Endabschnitte 6 zur Verankerung von vertikalen Stützelementen 9, die sich von der Abscheiderlage aus nach oben und unten erstrecken und an ihren Endbereichen mit Bedüsungsrohrtragelementen 10 versehen sind. Auf jedem Bedüsungsrohrtragelement 10 befinden sich zwei Bedüsungsrohre 8, wie in Figur 2 gezeigt.

Man erkennt ferner in Figur 2, daß über und unter den Trägern 2 Durchgangswege 11 für Inspektionen etc. gebildet werden, die eine Bedienungsperson für Wartungszwecke u. dgl. begehen kann. Da sich die Stützelemente 9 in der Richtung senkrecht zur Papierebene nur über eine relativ kurze Strecke erstrecken, ist von den Durchgangswegen 11 aus eine Inspektion der Abscheiderlagen 3, 4 möglich.

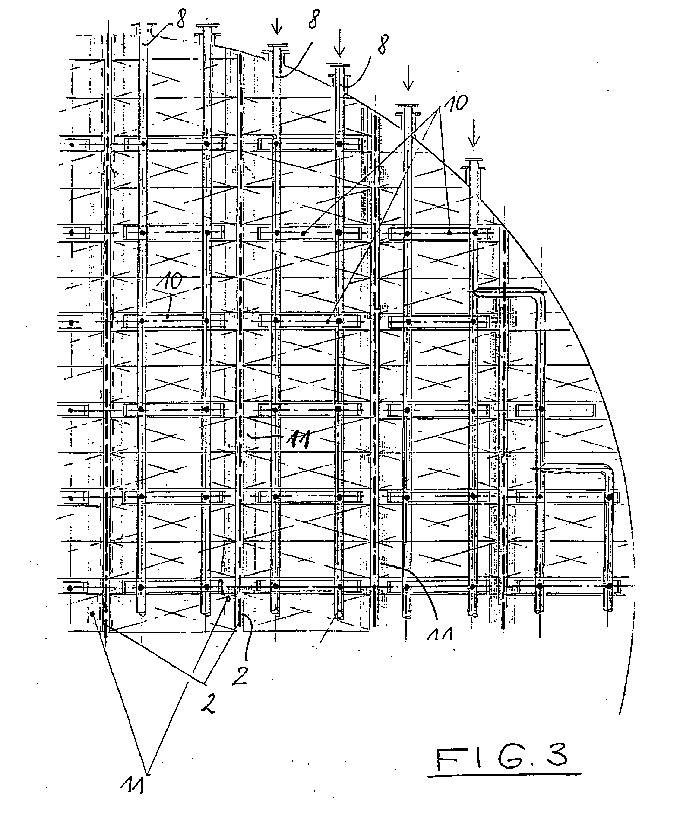

Figur 3 zeigt eine Draufsicht auf etwa ¼ des Querschnittes des Rauchgaswäschers 1. Man erkennt die über den Trägern 2 gebildeten Durchgangswege 11, die schraffiert dargestellt sind. Die Bedüsungsrohre 8 befinden sich zwischen den Trägern 2 und sind auf den Tragelementen 10 gelagert, wobei jeweils zwei Bedüsungsrohre 8 zwischen zwei Trägern 2 angeordnet sind.

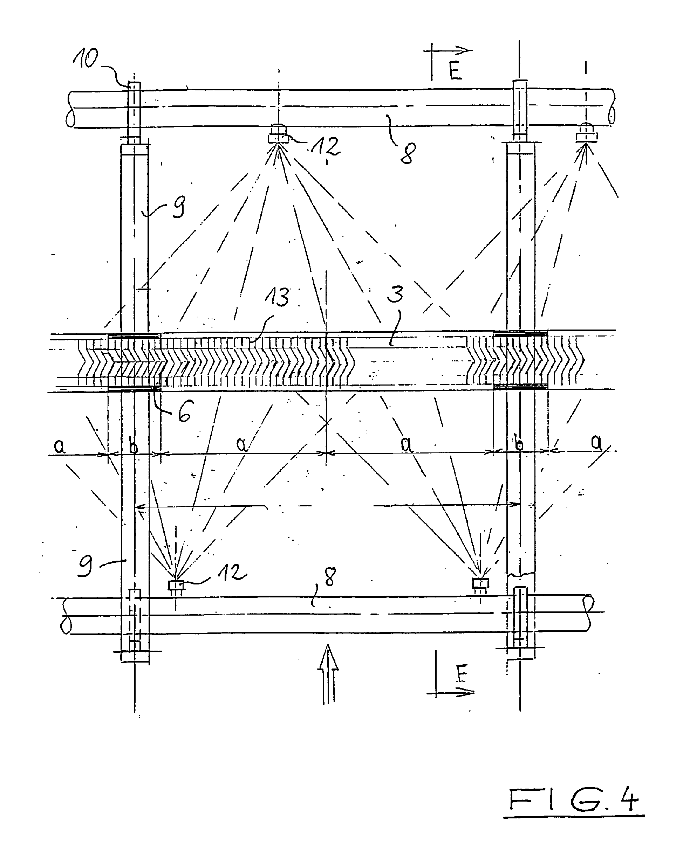

Figur 4 zeigt eine Ansicht der Stützkonstruktion 7 für die Bedüsungsrohre 8 in einer um 90° gedrehten Stellung gegenüber der Ansicht der Figur 2. Man erkennt hierbei, daß sich die vertikalen Stützelemente 9 senkrecht zur Zeichnungsebene nur geringfügig erstrecken, so daß sie in den mittig im jeweiligen Endabschnitt eines Tropfenabscheiderpaketes angeordneten verstärkten kastenförmigen Abschnitten 6 verankert werden können. Bei dieser Ausführungsform ist gezeigt, daß sich die Abscheiderlage 3 aus mehreren Abscheiderpaketen zusammensetzt, von denen nur einige mit den verstärkten Endabschnitten versehen sind. Die übrigen Pakete, die keine Tragfunktion für die Stützkonstruktion übernehmen, sind hierbei als normale Abscheiderpakete ausgebildet. Bei 12 sind die an den Bedüsungsrohren 8 angeordneten Düsen dargestellt, die in einem solchen Abstand voneinander angeordnet sind, daß sich ihre Sprühkegel überlappen, so daß der gesamte Bereich der Abscheiderpakete gereinigt werden kann. Die einzelnen Lamellen der Abscheiderpakete sind bei 13 angedeutet.

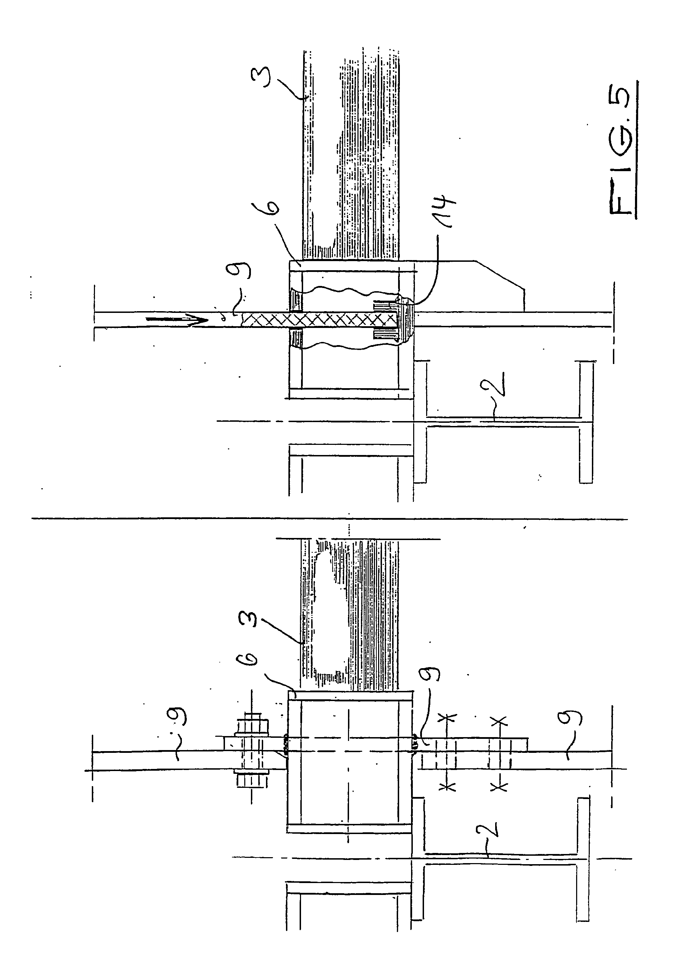

Figur 5 zeigt zwei unterschiedliche Varianten zur Befestigung der Stützelemente 9 in den kastenförmigen verstärkten Endabschnitten 6 der Abscheiderpakete. Bei der linken Variante erstreckt sich ein Element 9 durch den verstärkten Endabschnitt 6 hindurch und ist mit diesem verschweißt. Das sich durch den verstärkten Endabschnitt 6 erstreckende Stützelement 9 bildet außerhalb des verstärkten Endabschnittes 6 einen oberen und einen unteren Befestigungsflansch, mit denen zwei weitere Stützelemente 9 verschraubt sind, die sich nach oben und unten erstrecken und die Tragelemente 10 zur Lagerung der Bedüsungsrohre aufweisen.

Bei der rechten Variante von Figur 5 ist ein Stützelement 9 in den verstärkten kastenförmigen Endabschnitt 6 eingesetzt und in diesem in einer geeigneten Haltekonstruktion 14 fixiert. Es erstreckt sich dabei durch einen Schlitz auf der Oberseite des Endabschnitts 6 nach oben.

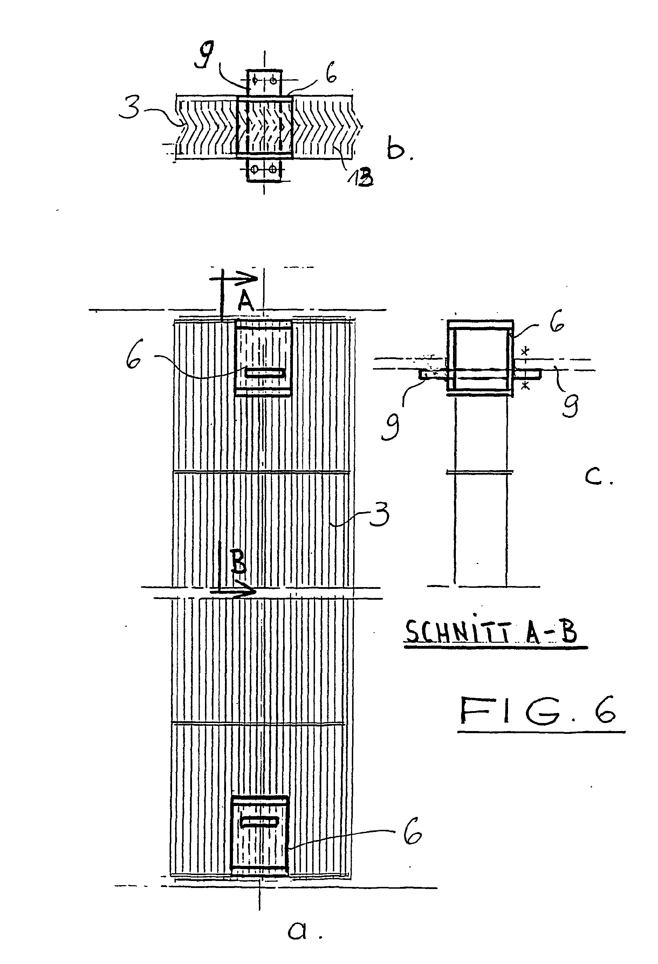

Figur 6a zeigt eine Draufsicht auf ein Abscheiderpaket. Dieses ist bei 3 angedeutet und weist die verstärkten kastenförmigen Endabschnitte 6 jeweils in der Mitte seiner Endbereiche auf. Figur 6b zeigt einen verstärkten kastenförmigen Endabschnitt 6 in der Seitenansicht mit eingesetztem Stützelement 9. Figur 6c zeigt eine um 90° gedrehte Seitenansicht.

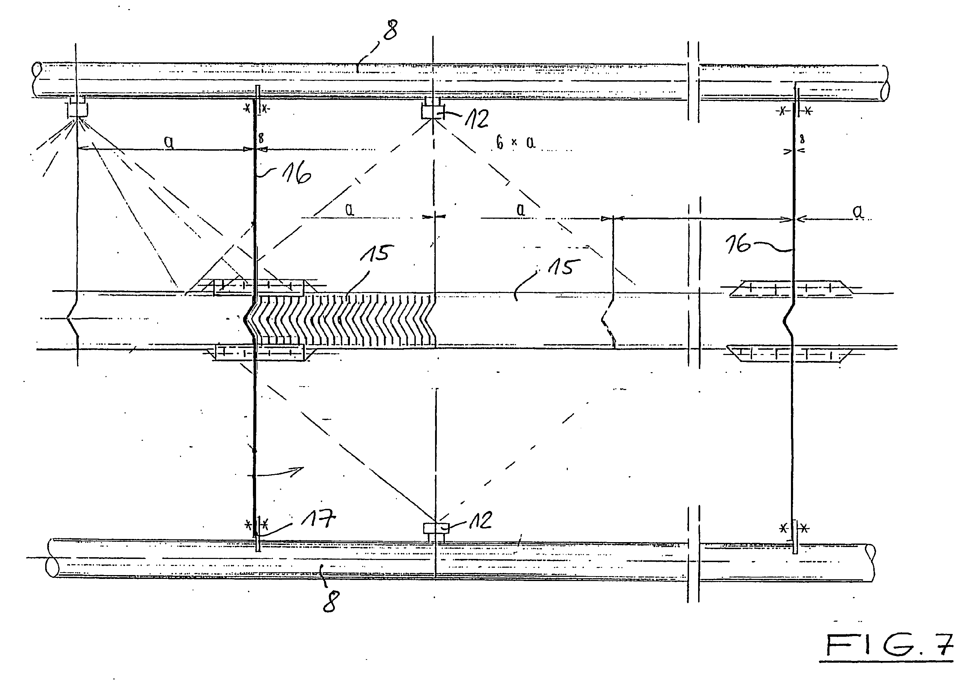

Figur 7 zeigt eine Stützkonstruktion, bei der stabförmige Stützelemente 16 nicht an den Abscheiderpaketen 15, sondern zwischen denselben angeordnet sind. Die stabförmigen Stützelemente 16 tragen über Laschen 17 die Bedüsungsrohre 8, an denen entsprechende Düsen 12 angeordnet sind.

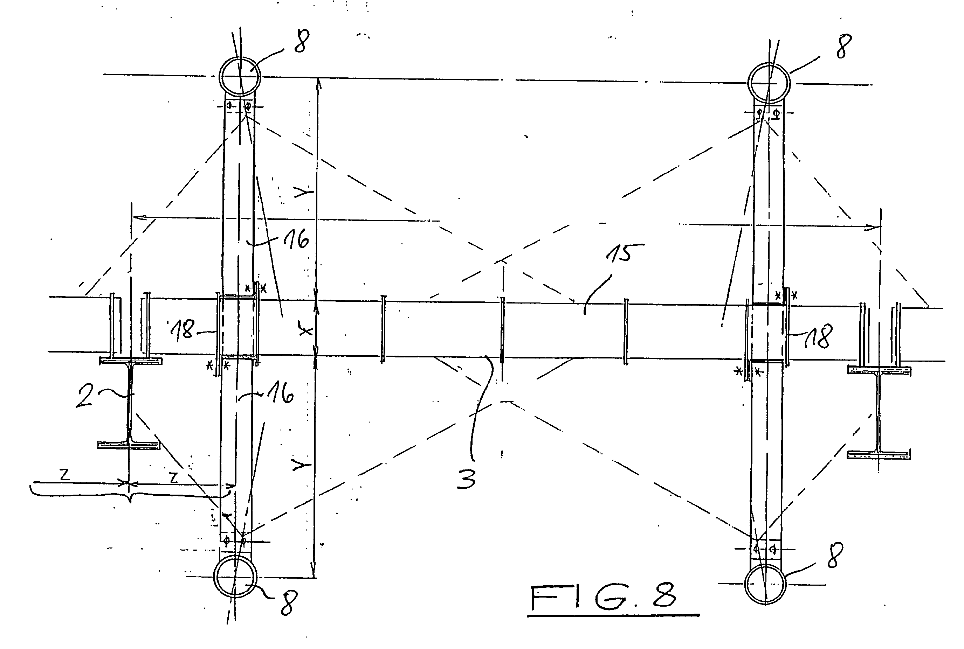

In Figur 8 erkennt man, daß sich die Stützelemente 16 in der Richtung parallel zur Achse der Träger 2 nur geringfügig erstrecken, so daß auch hier ein großer Freiraum zwischen den Stützelementen 16 für Inspektionszwecke zur Verfügung steht. Der Bereich oberhalb der Träger 2 kann begangen werden. Die Befestigung der Stützelemente 16 zwischen den Abscheiderpaketen 15 erfolgt über geeignete Flanschverbindungen, die bei 18 angedeutet sind.

## Patentansprüche

1. Rauchgaswäscher mit einer Stützkonstruktion (7) für Bedüsungsrohre (8) zum Reinigen von mindestens einer horizontal angeordneten Tropfenabscheiderlage (3, 4), die aus Tropfenabscheinderpaketen (15) gebildet ist, welche auf Trägern (2) gelagert sind, wobei die Stützkonstruktion (7) so angeordnet ist, dass der Raum oberhalb und unterhalb der Träger (2) freigehalten wird, und wobei die Stützkonstruktion (7) durch direkte Anordnung an oder zwischen den Tropfenabscheiderpaketen (15) von der Tropfenabscheiderlage (3, 4) selbst getragen wird und einen Bestandteil derselben bildet.

2. Rauchgaswäscher nach Anspruch 1, **dadurch gekennzeichnet, daß** die Tropfenabscheiderpakete (15) verstärkte Endabschnitte (6) zur Anordnung der Stützkonstruktion (7) besitzen.

3. Rauchgaswäscher nach Anspruch 2, **dadurch gekennzeichnet, daß** die verstärkten Endabschnitte (6) kastenförmig ausgebildet sind.

4. Rauchgaswäscher nach Anspruch 2 oder 3, **dadurch gekennzeichnet, daß** die verstärkten Endabschnitte (6) von mindestens einem stabförmigen Stützelement (9) durchdrungen sind.

5. Rauchgaswäscher nach Anspruch 4, **dadurch gekennzeichnet, daß** mehrere stabförmige Stützelemente (9) über ein Bedüsungsrohrtragelement (10) miteinander verbunden sind.

6. Rauchgaswäscher nach Anspruch 4 oder 5, **dadurch gekennzeichnet, daß** die stabförmigen Stützelemente (9) mehrteilig ausgebildet sind und eine Verbindungsstelle außerhalb des verstärkten Endabschnitts (6) besitzen.

7. Rauchgaswäscher nach einem der Ansprüche 4 bis 6, **dadurch gekennzeichnet, daß** sich ein oder mehrere stabförmige Stützelemente (9) vom verstärkten Endabschnitt (6) aus nach oben und unten erstrecken.

8. Rauchgaswäscher nach einem der Ansprüche 4 bis 7, **dadurch gekennzeichnet, daß** ein stabförmiges Stützelement (9) in einen verstärkten Endabschnitt (6) einsetzbar ist.

9. Rauchgaswäscher nach Anspruch 1, **dadurch gekennzeichnet, daß** die Stützkonstruktion von Stützelementen (16) gebildet ist, die jeweils zwischen benachbarten Tropfenabscheiderpaketen (15) angeordnet sind.

10. Rauchgaswäscher nach Anspruch 9, **dadurch gekennzeichnet, daß** die Stützelemente (16) über Flanschverbindungen (18) mit den Abscheiderpaketen (15) verbunden sind.

11. Rauchgaswäscher nach Anspruch 9 oder 10, **dadurch gekennzeichnet, daß** die Stützelemente (16) unmittelbar die Bedüsungsrohre (8) tragen.

12. Stützkonstruktion (7) zur Verwendung in einem Rauchgaswäscher (1) nach einem der Patentansprüche 1 bis 11 für Bedüsungsrohre (8) zum Reinigen von mindestens einer horizontal angeordneten Tropfenabscheiderlage (3, 4), die aus Tropfenabscheiderpaketen (15) gebildet ist, wobei die Stützkonstruktion (7) durch direkte Anordnung an oder zwischen den Tropfenabscheiderpaketen (15) von der Tropfenabscheiderlage (3, 4) selbst getragen wird und einen Bestandteil derselben bildet.

## Claims

1. A flue gas washer comprising a supporting construction (7) for spray pipes (8) for cleaning of at least one horizontally disposed droplet separator layer (3, 4) which is formed by droplet separator packets (15) supported on beams (2), wherein the supporting construction (7) is disposed in such a manner that the space above and below the beams (2) is kept free, and wherein the supporting construction (7) is carried by the droplet separator layer (3, 4) itself by the direct arrangement at or between the droplet separator packets (15) and forms a component of the droplet separator layer.

2. The flue gas washer according to claim 1, **characterized in that** the droplet separator packets (15) have reinforced end portions (6) for the arrangement of the support construction (7).

3. The flue gas washer according to claim 2, **characterized in that** the reinforced end portions (6) are formed in a box-like manner.

4. The flue gas washer according to claim 2 or 3, **characterized in that** the reinforced end portions (6) are penetrated by at least one rod-like supporting element (9).

5. The flue gas washer according to claim 4, **characterized in that** several rod-like supporting elements (9) are connected with one another by means of a spray pipe carrier element (10).

6. The flue gas washer according to clam 4 or 5, **characterized in that** the rod-like supporting elements (9) are formed in a multipart manner and have a connecting place outside of the reinforced end portion (6).

7. The flue gas washer according to one of the claims 4 to 6, **characterized in that** one or several rod-like supporting elements (9) extend upwardly or downwardly from the reinforced end portion (6).

8. The flue gas washer according to one of the claims 4 to 7, **characterized in that** a rod-like supporting element (9) is insertable into a reinforced end portion (6).

9. The flue gas washer according to claim 1, **characterized in that** the supporting construction is formed by supporting elements (16) which are arranged between adjacent droplet separator packets (15), respectively.

10. The flue gas washer according to claim 9, **characterized in that** the supporting elements (16) are connected to the droplet separator packets (15) by means of flange connections (18).

11. The flue gas washer according to claim 9 or 10, **characterized in that** the supporting elements (16) directly carry the spray pipes (8).

12. A supporting construction (7) for the use in a flue gas washer (1) according to one of the patent claims 1 to 11 for spray pipes (8) for cleaning of at least one horizontally disposed droplet separator layer (3, 4) which is formed by droplet separator packets (15), wherein the supporting construction (7) is carried by the droplet separator layer (3, 4) itself by direct arrangement at or between the droplet separator packets (15) and forms a component of the droplet separator layer.

## Revendications

1. Epurateur de gaz de fumée équipé d'une structure de soutien (7) pour tubes d'évacuation (8) pour le nettoyage d'au moins un site séparateur de gouttes (3, 4) agencé horizontalement, qui est formé de paquets séparateurs de gouttes, qui sont montés sur des supports (2), dans lequel la structure de soutien (7) est agencée de manière à laisser libre l'espace situé au-dessus et au-dessous des supports (2) et dans lequel la structure de soutien (7) est supportée par agencement direct sur ou entre les paquets séparateurs de gouttes par le site de paquets séparateurs de gouttes (3, 4) lui-même et forme un constituant de ce dernier.

2. Epurateur de gaz de fumée selon la revendication 1, **caractérisé en ce que** les paquets séparateurs de gouttes (15) possèdent des sections d'extrémité renforcées (6) pour l'agencement de la structure de soutien (7).

3. Epurateur de gaz de fumée selon la revendication 2, **caractérisé en ce que** les sections d'extrémité renforcées (6) se présentent en forme de caissons.

4. Epurateur de gaz de fumée selon la revendication 2 ou 3, **caractérisé en ce que** les sections d'extrémité renforcées (6) sont traversées par au moins un élément de soutien en forme de tige (9).

5. Epurateur de gaz de fumée selon la revendication 4, **caractérisé en ce que** plusieurs éléments de soutien en forme de tige (9) sont raccordés l'un à l'autre par le biais d'un élément porteur de tubes d'évacuation (10).

6. Epurateur de gaz de fumée selon la revendication 4 ou 5, **caractérisé en ce que** les éléments de soutien en forme de tige (9) sont formées de plusieurs parties et possèdent un point de raccordement situé à l'extérieur de la section d'extrémité renforcée (6).

7. Epurateur de gaz de fumée selon l'une quelconque des revendications 4 à 6, **caractérisé en ce qu'**un ou plusieurs éléments de soutien en forme de tige (9) s'étend/s'étendent vers le haut et le bas depuis la section d'extrémité renforcée (6).

8. Epurateur de gaz de fumée selon l'une quelconque des revendications 4 à 7, **caractérisé en ce qu'**un élément de soutien en forme de tige (9) peut être inséré dans une section d'extrémité renforcée (6).

9. Epurateur de gaz de fumée selon la revendication 1, **caractérisé en ce que** la structure de soutien est formée d'éléments de soutien (16), qui sont agencés respectivement entre des paquets séparateurs de gouttes adjacents (15).

10. Epurateur de gaz de fumée selon la revendication 9, **caractérisé en ce que** les éléments de soutien (16) sont raccordés par le biais de raccords à brides (18) aux paquets séparateurs de gouttes (15).

11. Epurateur de gaz de fumée selon la revendication 9 ou 10, **caractérisé en ce que** les éléments de soutien (16) portent directement les tubes d'évacuation (8).

12. Structure de soutien (7) pour usage dans un épurateur de gaz de fumée (1) selon l'une quelconque des revendications 1 à 11, destinée à des tubes d'évacuation (8) pour le nettoyage d'au moins un site séparateur de gouttes (3, 4) agencé horizontalement, qui est constitué de paquets séparateurs de gouttes (15), laquelle structure de soutien (7) est portée via un agencement direct sur ou entre les paquets séparateurs de gouttes (15) par le site séparateur de gouttes (3, 4) lui-même et forme un constituant de ce dernier.
